# EUROPEAN PATENT SPECIFICATION

(11) **EP 3 072 686 B1**
(45) Date of publication and mention of the grant of the patent: **09.01.2019**
(21) Application number: 15161137.3
(22) Date of filing: 26.03.2015
(51) Int. Cl.: B32B 27/08, B32B 27/32

(54) **MULTI-LAYER POLYMERIC FILMS**
MEHRSCHICHTIGE POLYMERFOLIE
FILMS POLYMÈRES MULTICOUCHES

(43) Date of publication of application: 28.09.2016
(73) Proprietor: The Procter & Gamble Company, Cincinnati, OH 45202 (US)
(72) Inventor: Kohlweyer, Christian, 65824 Schwalbach am Taunus (DE)
(74) Representative: Kremer, Véronique Marie Joséphine

(56) References cited:
- US-A1- 2009 246 491
- US-A1- 2012 237 743

## Description

### FIELD OF THE INVENTION

The present invention provides a multilayer polymeric film comprising at least one polypropylene-rich layer and at least one polyethylene-rich layer. The multilayer polymeric film can be used as packaging films to make primary bags such as wicket bags or flow-wrap bags. Primary bags can include disposable absorbent articles.

### BACKGROUND OF THE INVENTION

Flexible films as primary bag materials in the consumer products markets are well known. In the area of flexible films, there have been previous attempts to make the flexible films with improved properties, for instance see EP 1 275 664 B1; PCT Patent Publications WO 00/76765 A1; WO 2010/015402 A1; and WO 2012/085240.

US 2012/237743 A1 discloses a multilayer polymeric film, said film comprising a core comprising at least two layers, and a pair of skin layers.

To be economically viable, packaging films must be processable via automated equipment in a reliable manner. This may require the film materials to be manufactured with certain mechanical properties, e.g. tensile strength, elongation and stress stain curves, in order to reliably proceed through the film printing and converting equipment.

Hence, there is a need to develop multilayer polymeric films having improved mechanical properties. In particular, it would be desirable to have higher performance, lower cost multilayer polymeric films. Higher performance includes providing multilayer films with a lower thickness that are not brittle and do not tear easily. Therefore, it would be desirable to provide a multilayer polymeric film which comprises lower thickness, where the multilayer polymeric film has improved performance characteristics to satisfy product and/or packaging needs.

### SUMMARY OF THE INVENTION

A multilayer polymeric film having two outer surfaces and a thickness is provided and comprises:
- a core comprising:
   a) at least one polypropylene-rich (A) layer having a thickness, wherein polypropylene is the major component of the polypropylene-rich (A) layer, wherein the thickness of the polypropylene-rich (A) layer(s) comprises from 5% to 30% of the thickness of the multilayer polymeric film; wherein each polypropylene-rich (A) layer has a thickness from 0.05 micrometers to 50 micrometers and;
   b) at least one polyethylene-rich (B) layer having a thickness, comprising high density polyethylene (HDPE) as the major component, preferably wherein said polyethylene-rich (B) layer is joined at least indirectly to said polypropylene-rich (A) layer, wherein the thickness of the polyethylene-rich (B) layer(s) comprises from 31% to 50% of the thickness of the multilayer polymeric film, wherein each polyethylene-rich (B) layer has a thickness from 0.05 micrometers to 75 micrometers; and
- a pair of skin layers, each skin layer forming each of the outer surfaces of said multilayer polymeric film, wherein the skin layers have a combined thickness that is between 20% and 64% of the thickness of the multilayer polymeric film, and preferably said combination of layers forming the core of the multilayer polymeric film is at least indirectly joined to said skin layers.

### BRIEF DESCRIPTION OF THE DRAWINGS

While the specification concludes with claims particularly pointing out and distinctly claiming the present invention, it is believed that the same will be better understood from the following description read in conjunction with the accompanying drawings in which:
Fig. 1 is a schematic representation of a multilayer polymeric film having two skin layers and one (A) layer which is sandwiched between two (B) layers that form the core of the multilayer polymeric film.
Fig. 2 is a schematic representation of a multilayer polymeric film having two skin layers and (A) and (B) layers that form the core of the multilayer polymeric film.
Fig. 3 is a schematic representation of a multilayer polymeric film having two skin layers and a combination of (A, B, and C) layers that form the core of the multilayer polymeric film.
Fig. 4 is a schematic representation of a multilayer polymeric film having two skin layers and one combination of (A and B) layers that form the core of the multilayer polymeric film.
Fig. 5 is a schematic representation of a multilayer polymeric film having two skin layers and another combination of (A and B) layers, along with energy dissipating layers that form the core of the multilayer polymeric film.
Fig. 6 is a schematic representation of a multilayer polymeric film having two skin layers and another combination of (A and B) layers, along with energy dissipating layers that form the core of the multilayer polymeric film.
Fig. 7 is a schematic representation of a multilayer polymeric film having two skin layers and several (A/B) repeating layers.
Fig. 8 is a schematic representation of a multilayer polymeric film having two skin layers and several (A/B/A) repeating layers.
Fig. 9 is a schematic representation of a multilayer polymeric film having two skin layers and several (B/A/B) repeating layers.
Fig. 10 is a schematic representation of a multilayer polymeric film having two multilayer stacks separated by a bulk layer.

Some of the figures may have been simplified by the omission of selected elements for the purpose of more clearly showing other elements. Such omissions of elements in some figures are not necessarily indicative of the absence of particular elements in any of the exemplary embodiments, except as may be explicitly delineated in the corresponding written description. The drawings are not necessarily to scale.

### DETAILED DESCRIPTION OF THE INVENTION

### Definition of terms

The term "bio-based content" as used herein refers to the amount of carbon from a renewable resource in a material as a percent of the mass of the total organic carbon in the material, as determined by ASTM D6866-10, method B.

The term "bulk layer" as used herein refers to a layer of the multilayer polymeric film that adds bulk to the multilayer polymeric film by having a thickness greater than 1 micrometer, and that lies between the skin layers, and is not part of the (A) and (B) layers.

The term "copolymer" as used herein refers to a polymer derived from two or more polymerizable monomers. When used in generic terms, the term "copolymer" is also inclusive of more than two distinct monomers, for example, terpolymers. The term "copolymer" is also inclusive of random copolymers, block copolymers, and graft copolymers.

The term "polymer" as used herein is inclusive of homopolymers and copolymers, and copolymers can exhibit both homogeneous and heterogeneous morphologies.

The term "copolypropylene" ("coPP") as used herein refers to a copolymerization of propylene and another monomer such as ethylene or an alpha-olefin exemplified by a propylene-ethylene block, or random copolymer.

The term "core" as used herein refers to the inner layers of the multilayer polymeric film (between the skin layers) and can include multilayer or microlayer repeating stacks and/or bulk layers. The term "core" does not require that such inner layers be centered inside the multilayer polymeric film.

The term "energy dissipating layer" or "EDL" as used herein refers to a layer that can be used to improve at least one of: the dart impact resistance of the multilayer polymeric film as measured by ASTM D1709-09, or the total energy impact by dart drop as measured by ASTM D4272-09, in comparison to a multilayer polymeric film having the same structure but without an EDL.

The term "homopolymer" as used herein refers to a polymer derived from a single polymerizable monomer.

The term "impact copolymer polypropylene" (or "ICP") as used herein refers to a type of copolypropylene ("coPP") in which a copolymer is formed inside the pores of a homopolymer, and may, thus, be considered to be heterophasic.

The term "joined to" as used herein encompasses configurations in which an element is directly secured to another element by affixing the element directly to the other element, and configurations in which the element is indirectly secured to the other element by affixing the element to intermediate member(s) which in turn are affixed to the other element. "Affixed" includes, but is not limited to structures in which elements are held together by having been coextruded.

The term "machine direction" or "MD" as used herein means the direction parallel to the flow of the endless sheet of the multilayer polymeric film through the film making machine and/or film manufacturing equipment.

The term "cross-machine direction" or "CD" as used herein means the path that is perpendicular to the machine direction in a plane of the multilayer polymeric film.

The term "major component" as used herein refers to greater than 40 wt. % of the specified resin within the specified layer or composition.

The term "micro-layer" as used herein refers to a layer having a thickness of less than one micron (micrometer).

The term "olefin block copolymer" or "OBC" as used herein is a multi-block copolymer and may include ethylene and one or more copolymerizable alpha-olefin comonomer in polymerized form. The blocks are characterized by different alpha-olefin chemical composition or alpha-olefin comonomer distribution within the block versus adjacent regions in the molecule.

The term "polyethylene-rich" as used herein refers to a layer in which polyethylene is the major component of the layer.

The term "polypropylene-rich" as used herein refers to a layer in which polypropylene is the major component of the layer.

The term "polyolefin" as used herein refers to any polymerized olefin, which can be linear, branched, cyclic, aliphatic, aromatic, substituted, or unsubstituted, including "modified polyolefin" and copolymers. More specifically, included in the term polyolefin are homopolymers of olefin, copolymers of olefins, copolymers of an olefin and a non-olefinic comonomer copolymerizable with the olefin, such as vinyl monomers, modified polymers thereof, and the like. The polyolefins need not be limited to polymers of ethylene but could be any homopolymer or copolymer known in the art such as, ethylene with alpha-olefin, polypropylene, polypropylene with alpha-olefin such as propylene-butene copolymer, poly(butene-1), ethylene vinyl acetate resin, poly(4-methyl-pent-1-ene), ethylene acrylic acid, ethylene based ionomers, any low density polyethylene, and the like.

The term "renewable resource" as used herein refers to a natural resource that can be replenished within a 100 year time frame. The resource may be replenished naturally, or via agricultural techniques. Renewable resources include plants, animals, fish, bacteria, and fungi. They may be naturally occurring, hybrids, or genetically engineered organisms. Natural resources such as crude oil, coal, and peat which take longer than 100 years to form are not considered to be renewable resources.

The terms "standard conditions" or "standard temperature", as used herein, refer to a temperature of 25°C and 50% relative humidity.

The term "titanium dioxide masterbatch" (TiO₂ MB) refers to a dispersion of titanium dioxide in a low density polyethylene (LDPE) resin matrix.

### I. Multilayer polymeric films

A multilayer polymeric film having two outer surfaces and a thickness is provided. The multilayer polymeric film comprises a core, and a pair of skin layers. Each skin layer forms typically each of the outer surfaces of the multilayer polymeric film. The core of the multilayer polymeric film comprises at least one polypropylene-rich layer designated herein as an (A) layer and at least one polyethylene-rich layer designated as a (B) layer, wherein the polypropylene-rich (A) and polyethylene-rich (B) layers have a different composition. In addition, many embodiments are possible with more than one polypropylene-rich (A) and/or polyethylene-rich (B) layers. The polypropylene-rich (A) and polyethylene-rich (B) layers may be in various arrangements including, alternating and adjacent layer arrangements. The polypropylene-rich (A) and polyethylene-rich (B) layers can serve any suitable purpose including providing stiffness, tensile strength, opacity, gloss and/or reinforcement to the multilayer polymeric film.

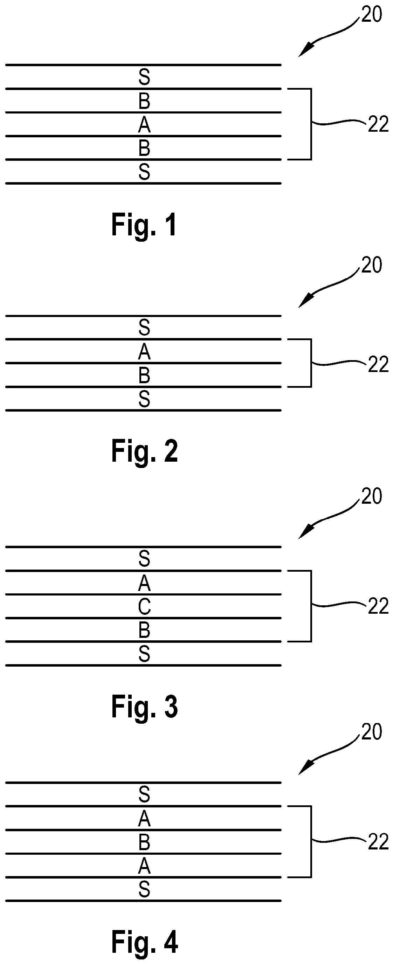

Fig. 1 shows one multilayer polymeric film 20 that comprises two skin or "S" layers and a combination of two polyethylene-rich (B) layers and a polypropylene-rich (A) layer sandwiched between the two polyethylene-rich (B) layers forming the core 22 therebetween. Each skin layer forms one of the outer surfaces of the multilayer polymeric film 20. Each of the layers described herein has two opposed surfaces. The surfaces may be referred to herein as a first (or "upper") surface and a second (or "lower") surface. It is understood, however, that the terms "upper" and "lower" refer to the orientation of the multilayer polymeric film shown in the Figures for convenience, and that if the multilayer polymeric film is rotated, these layers will still bear the same relationship to each other, but an upper layer may be a lower layer and a lower layer may be an upper layer after the multilayer polymeric film is rotated. The layers are arranged so at least one surface of a layer is joined to the surface of another layer.

The polypropylene-rich (A) layer(s) of the multilayer polymeric film is a polypropylene-rich layer, in which polypropylene is the major component or sole component of the layer. If the polypropylene-rich (A) layer does not solely comprise polypropylene, the polypropylene-rich (A) layer may comprise polyethylene as an optional additional component. Any suitable type of polypropylene that provides tensile strength, stiffness, and/or reinforcement to the multilayer polymeric film and any polyethylene that provides ductility to the polypropylene can be used in the polypropylene-rich (A) layer. These components can be blended in any suitable proportions, provided that polypropylene is the major component of the layer. Some types and proportions of polypropylene, however, may provide the multilayer polymeric film with more desirable properties.

Suitable types of polypropylene (PP) may include: homopolymer isotatic polypropylene and copolymer propylene (coPP). Copolymer propylene (coPP) includes random and block polymers that include ethylene and other alpha-olefin comonomers to form copolymers such as propylene-ethylene block copolymers, propylene-ethylene random copolymers, heterophasic copolypropylene including impact copolymer polypropylene (or "ICP"), as well as any blend thereof. The materials in the polypropylene-rich (A) layers (and polyethylene-rich (B) layers described below) may be chosen to have higher tensile strength and modulus than that of the materials in the skin or any bulk layers described below.

One suitable polypropylene is impact copolymer polypropylene (or "ICP"). An example of commercial impact copolymer polypropylene resin is PRO-FAX® 7624 available from LyondellBasell (or "LBI") of Houston, Texas, U.S.A or RB709CF® available from Borealis of Mechelen, Belgium. The impact copolymer propylene can provide tensile strength, stiffness and better resistance to tear to the multilayer polymeric film. Also, the impact copolymer propylene can provide a better energy dissipation than a random polypropylene. The energy dissipation is related to the viscous losses in the multilayer polymeric film. Adding ICP in the polypropylene-rich (A) layer can help improving the energy dissipation in the multilayer polymeric film which provides a soft film structure.

Suitable types of polyethylene (PE) may include: linear low density polyethylene (LLDPE), low density polyethylene (LDPE), medium density polyethylene (MDPE), ethylene vinyl acetate, and ethylene copolymers such as random or multi-block ethylene alpha-olefin. The particular polyethylene may be selected to improve the ductility of the (A) layer.

The polyethylenes can be polymerized using any suitable reaction system such as high pressure, slurry, gas phase, and any suitable catalyst system such as Ziegler Natta, constrained geometry, or single-site/metallocene. An example of a suitable commercial linear low density polyethylene (LLDPE) resin is DOWLEX® 5056.01G available from the Dow Chemical Company of Midland, Michigan, U.S.A. An example of a suitable commercial metallocene linear low density polyethylene (m-LLDPE) resin is EXCEED® 2018KB available from ExxonMobile Chemical Company, Houston, U.S.A.

It may be desirable for the polypropylene-rich (A) layer to be substantially, or completely free of high density polyethylene (HDPE). Without wishing to be bound by any particular theory, it has been found that placing the polypropylene, particularly the impact copolymer polypropylene, and HDPE in separate layers can improve the mechanical properties of the multilayer polymeric film.

The polypropylene-rich (A) layer may also comprise other suitable materials including ethylene alpha-olefins, including to polyolefin plastomers (POP), polyolefin elastomers (POE), olefinic block copolymers (OBC's), and additives. Polyolefin plastomers and polyolefin elastomers are typically thermoplastic. Example commercial polyolefin plastomer resins include Dow AFFINITY™ 1850G available from the Dow Chemical Company, and ExxonMobil EXACT™ 4056 available from the ExxonMobil Chemical Company, Houston, TX, U.S.A. Example commercial polyolefin elastomers include ENGAGE™ 8450 available from the Dow Chemical Company. Example olefinic block copolymer elastomers include INFUSE™ 9100 available from the Dow Chemical Company.

At least one polypropylene-rich (A) layer of the multilayer polymeric film has a thickness. The polypropylene is the major component of the polypropylene-rich (A) layer. The thickness of the polypropylene-rich (A) layer or the combined thickness of the polypropylene-rich (A) layers (if more than one polypropylene-rich (A) layer) comprises from 5% to 30% or from 10% to 15% or from 10% to 20% or from 14% to 20% of the thickness of the multilayer polymeric film.

Suitable proportions of polypropylene in the polypropylene-rich (A) layer(s) may comprise at least 40 wt. %, alternatively from 45 wt. % to 100 wt. % of polypropylene, alternatively from 50 wt. % to 100 wt. %, alternatively from 75 wt. % to 95 wt. % of polypropylene. The total amount of all types of polymers used in the polypropylene-rich (A) layers may comprise any suitable weight percentage of the polypropylene-rich (A) layers, such as from 40 wt. % to 100 wt. %, alternatively from 70 wt. % to 100 wt. %, alternatively from 75 wt. % to 95 wt. % by weight of each of the polypropylene-rich (A) layers.

At least some of the polypropylene in the polypropylene-rich (A) layer(s) may comprise at least one of impact copolymer polypropylene ("ICP"). In some multilayer polymeric films, ICP may be the major component of the polypropylene-rich (A) layer(s). The ICP may, thus, comprise at least 45 wt. %, alternatively from 45 wt. % to 100 wt. % or from 60 wt. % to 100 wt. %, alternatively from 70 wt. % to 100 wt. %, alternatively from 75 wt. % to 95 wt. % of the polypropylene-rich (A) layer(s).

At least some of the polypropylene in the polypropylene-rich (A) layer(s) may comprise at least one of a homopolymer polypropylene or copolymer polypropylene (coPP). In some multilayer polymeric films, coPP may be the major component of the polypropylene-rich (A) layer(s). The coPP may, thus, comprise greater than 50 wt. %, alternatively from 60 wt. % to 100 wt. %, alternatively from 70 wt. % to 100 wt. %, alternatively from 75 wt. % to 95 wt. % of the polypropylene-rich (A) layer(s).

The polypropylene-rich (A) layer(s) may comprise coPP having a largest enthalpic melting point peak greater than 140°C, alternatively greater than or equal to 150°C. The largest enthalpic melting point peak, reported as heat flow, is measured using differential scanning calorimeter at a scan rate of 10°C/min. The sample is heated, cooled, and heated a second time to erase previous thermo mechanical history. The DSC melting point, Tₚₘ, from the second heat cycle is used for this determination as defined in ASTM D3418. The coPP may have a melt flow rate from 0.5 to 10.

In some multilayer polymeric films, the polypropylene-rich (A) layer(s) may comprise a blend of impact copolymer polypropylene and at least one of the following: LDPE, LLDPE, m-LLDPE, polyolefin plastomer (POP), or polyolefin elastomer (POE), or OBC.

The polypropylene-rich (A) layer(s) may have any suitable properties. In some of the multilayer polymeric films, the overall or average density of the composition used to form the polypropylene-rich (A) layer is from 0.87 g/cm³ to 0.93 g/cm³.

The polypropylene-rich (A) layer(s) may each have any suitable thickness including a thickness from 0.05 micrometer to 50 micrometers. Alternatively, the polypropylene-rich (A) layer(s) may each have a thickness that is from any of the following: 0.05, 0.1, 0.2, 0.4 or 0.8 micrometers to any of the following: 50, 45, 35, 25, 15, 10, 5, or 1 micrometers. Thus, the polypropylene-rich (A) layer(s) may have a range of thickness from 0.05 micrometers to 45 micrometers including: from 0.05 micrometers to 30 micrometers; from 0.4 micrometers to 20 micrometers. The thickness of the polypropylene-rich (A) layer, if only one, or the thickness of all of the polypropylene-rich (A) layers combined (if more than one) may range from 5% to 30% of the total thickness of the multilayer polymeric film, or alternatively from 10% to 25% of the multilayer polymeric film.

The polyethylene-rich (B) layer(s) of the multilayer polymeric film comprises high density polyethylene (HDPE) as the major component. When the polyethylene-rich (B) layer comprises HDPE, the density of the HDPE used in the polyethylene-rich (B) layer(s) may be at least 0.94 g/cm³, alternatively at least 0.95 g/cm³, alternatively at least 0.955 g/cm³. The maximum density of the HDPE used in the polyethylene-rich (B) layer(s) may be less than or equal to 0.97 g/cm³, alternatively less than or equal to 0.965 g/cm³.

The polyethylene-rich (B) layer(s) can comprise any other suitable material in addition to polyethylene (or HDPE) including: ethylene alpha-olefins, which include, but are not limited to polyolefin plastomers, polyolefin elastomers, OBC's; and additives. Specific examples of such other suitable materials include: LDPE, LLDPE, m-LLDPE, ethylene vinyl acetate, and ethylene methyl acrylate. It is well known that a HDPE layer can be brittle and crack under a light impact load.

Alternatively, the polyethylene-rich (B) layer(s) may comprise a blend of HDPE and at least one of LDPE and LLDPE. In particular, a blend of HDPE and LLDPE can help reducing the brittle and noisy characteristics of the HDPE layer.

The total amount of all types of polymers used in the polyethylene-rich (B) layers may comprise any suitable weight percentage of the polyethylene-rich (B) layers, such as from 50 wt. % to 100 wt. %, alternatively from 70 wt. % to 100 wt. %, alternatively from 75 wt. % to 95 wt. % by weight of each of the polyethylene-rich (B) layers. Some types and proportions of polyethylene, however, may provide the multilayer polymeric film with more desirable properties.

The polyethylene (for example, HDPE) can comprise any suitable proportion of the polyethylene-rich (B) layer(s) including: greater than 50 wt. %, alternatively from 60 wt. % to 100 wt. %, alternatively from 70 wt. % to 100 wt. %, alternatively from 80 wt. % to 100 wt. %, and alternatively from 75 wt. % to 95 wt. %.

The polyethylene-rich (B) layer may have any suitable properties. Where resin includes only HDPE or ethylene-alpha-olefin, the overall or average density of the composition making up the polyethylene-rich (B) layer may be greater than or equal to 0.93 g/cm3, alternatively greater than or equal to 0.94 g/cm³, or alternatively greater than or equal to 0.95 g/cm³.

The polyethylene-rich (B) layer(s) may have a thickness in the same ranges specified herein for the polypropylene-rich (A) layers. The thickness of each of the polyethylene-rich (B) layers is thus between 0.05 micrometers and 75 micrometers or may be between 0.05 micrometers and 50 micrometers or between 0.05 micrometers and 35 micrometers. The thickness of the polyethylene-rich (B) layer, if only one, or the thickness of all of the polyethylene-rich (B) layers combined (if more than one) ranges from 31% to 50% of the total thickness of the multilayer polymeric film, or alternatively may range from 32% or from 33% or from 34% or from 35% to 50% of the multilayer polymeric film, or from 35% to 45% of the multilayer polymeric film.

The polypropylene-rich (A) layer(s) and the polyethylene-rich (B) layer(s) can have substantially the same thickness, or different thicknesses (in micrometers). In addition, it is not necessary for all of the polypropylene-rich (A) layers to have the same thickness as other polypropylene-rich (A) layers, or all of the polyethylene-rich (B) layers to have the same thickness as other polyethylene-rich (B) layers. It is also not necessary for all of the polypropylene-rich (A) and polyethylene-rich (B) layers to have the same thickness relative to each other. Thus, some polypropylene-rich (A) layers may have the same thickness as some polyethylene-rich (B) layers, and some polypropylene-rich (A) layers may have a different thickness than some polyethylene-rich (B) layers. This may be a function of the method of making the multilayer polymeric film. The thickness of the polypropylene-rich (A) and/or polyethylene-rich (B) layers may increase or diminish throughout the thickness of the multilayer polymeric film yielding a gradient layering structure. The ratio of the thickness of a polypropylene-rich (A) layer to a polyethylene-rich (B) layer can be in any suitable range including from 1:1 to 1:5 or from 5:1 to 1:1; or from 1:1.1 to 1:4 or from 4:1 to 1.1:1.

At least some of the polypropylene-rich (A) layers and/or polyethylene-rich (B) layers can be "macro layers", having a thickness of greater than or equal to 1 micrometer. If the polypropylene-rich (A) and polyethylene-rich (B) layers are all macrolayers, the entire multilayer polymeric film can be a macrolayer film. Alternatively, at least some of the polypropylene-rich (A) layers and/or polyethylene-rich (B) layers can be "microlayers", having a thickness of less than 1 micrometer. For example, microlayers of polypropylene-rich (A) and polyethylene-rich (B) can have a thickness of greater than or equal to 0.05 micrometers to less than or equal to: 0.9 , 0.8 , 0.75, 0.7, 0.6, 0.5, or 0.4 micrometers.

Regardless of whether the polypropylene-rich (A) layers and polyethylene-rich (B) layers are macrolayers or microlayers, the sum of the thickness of all of the polypropylene-rich (A) and polyethylene-rich (B) layers may be less than or equal to 80% of the total thickness of the multilayer polymeric multilayerfilm, alternatively less than or equal to 50% of the multilayer polymeric film. The sum of the thickness of all of the polypropylene-rich (A) and polyethylene-rich (B) layers may, for example, range from 40% to 80%, alternatively from 40% to 60% of the thickness of the multilayer polymeric film.

The relative weight fraction of the layers is a measure of the relative weights of the compositions that are used to form the respective layers. The relative weight fraction between the polypropylene-rich (A) layer(s) and the polyethylene-rich (B) layer(s) (i.e., the sum of the weight fraction of all the polypropylene-rich (A) or polyethylene-rich (B) layers, in case more than one polypropylene-rich (A) layers or polyethylene-rich (B) layers are present, may be between 1:5 and 5:1; alternatively between 1:3 and 3:1; alternatively between 1:2 and 2:1; and alternatively between 1:1.5 and 1.5:1.

Additional layers may be included in the multilayer polymeric film which are neither polypropylene-rich (A) layers nor polyethylene-rich (B) layers (e.g., one or more (C), "D", etc. layers). The other layer(s) may be included for any suitable purpose, including to further modify the multilayer polymeric film properties, and/or to add bulk for mechanical strength to the multilayer polymeric film. The other layer(s) may be comprised of any suitable materials. Suitable materials include polymeric or polyolefin resins, including: polyolefin plastomers and elastomers, OBC, ethylene vinyl acetate, and/or bio-derived polyolefin resins. The additional layers can be microlayers having a thickness less than 1 micrometer that are part of a microlayer stack; or bulk layers having a thickness greater than or equal to 1 micrometer that are not part of a microlayer stack.

The additional layer(s), for example, the (C) layer(s) may comprise a polyolefin plastomer, polyolefin elastomer, or OBC. Such a layer may serve as an energy dissipating layer (EDL) (or impact layer). The EDL in a multilayer polymeric film may be located adjacent to and/or between the polypropylene-rich (A) layer and the polyethylene-rich (B) layer. It may be desirable for any EDL to be distinguishable from tie layers that serve primarily to join two (incompatible) layers together. Thus, the energy dissipating layer (EDL) and layers adjacent thereto may be sufficiently similar in properties that there is no delamination therebetween. When present, the EDL, if only one, or the thickness of all of the EDL's combined (if more than one) may be less than or equal to 15% of the thickness of the multilayer polymeric film, alternatively less than or equal to 10% of the thickness of the multilayer polymeric film.

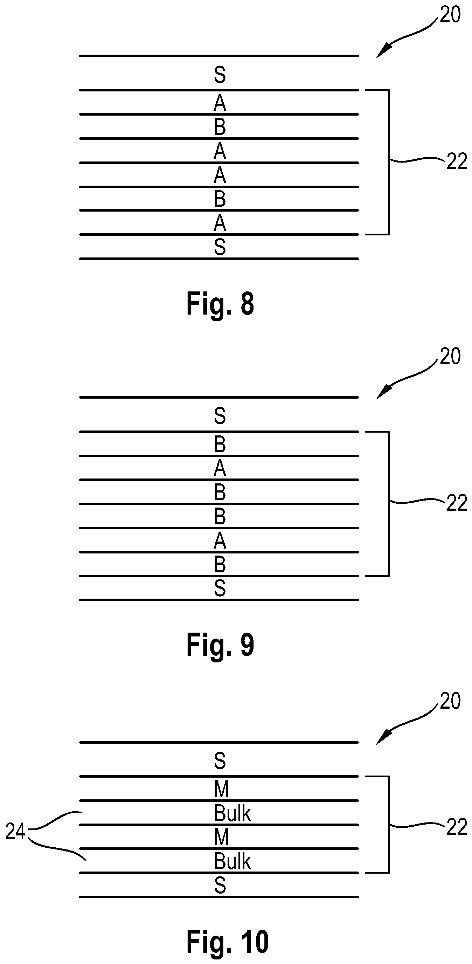

The additional layer(s) may comprise bulk layers which may be designated in Fig. 10 as "Bulk" or by reference number 24. The bulk layer(s) may comprise any suitable materials. Suitable materials for the bulk layer(s) include any of those materials described above for the additional layers. The bulk layer(s) may comprise a blend of LDPE and LLDPE. The bulk layers may comprise, or may consist essentially of, one or more of the following: polyolefin plastomers, polyolefin elastomers, OBC, ethylene vinyl acetate, and/or bio-derived polyolefin resins. The properties of any bulk layers are further described below in conjunction with the skin layers.

The skin layer(s), (S), can serve any suitable function. Such functions may include, but are not limited to controlling the properties of the multilayer polymeric film 20 so that the multilayer polymeric film has the desired overall properties (e.g., mechanical properties, bulk, softness, opacity, gloss, etc.). The skin layer(s) may also serve to provide stability during extrusion, and/or provide the multilayer polymeric film with still other properties, such as: better receptivity to printing; and better bonding or sealing to itself and/or to other materials.

The skin layer(s) may comprise any materials suitable for such purposes. Suitable materials for the skin layer(s) may include: polymeric or polyolefin resins; bio-derived polyolefin resins; ethylene vinyl acetate; ethylene acrylic acid; and DuPont™ SURLYN® (ethylene methacrylic acid (E/MAA) copolymers in which part of the methacrylic acid is neutralized with metal ions such as zinc (Zn²⁺) or sodium (Na⁺)); and additives. The skin layer(s) comprise a blend of LDPE and LLDPE. For packaging applications having a seal, the skin layer(s) may comprise a high proportion of metallocene-based LLDPE including greater than or equal to 50%, alternatively 75% metallocene-based LLDPE. It may be desirable for the skin layers to be substantially or completely free of polypropylene in order for the outside of the multilayer polymeric film to be less rough (softer to the touch), less stiff, and less noisy.

The multilayer polymeric film comprises a skin layer (S) on each side of the multilayer polymeric film. The skin layer on one side of the multilayer polymeric film can comprise the same materials as the skin layer on the other side of the multilayer polymeric multilayerfilm. The skin layers can differ in composition.

The skin layers (S) and any bulk layer(s) can be of any suitable thickness. Each of the skin layers can have the same thickness, or the two skin layers may differ in thickness. The bulk layer(s) may have the same thickness as either of the skin layers, or a different thickness. For example, each bulk layer may have a thickness of less than or equal to, or less than 10% of the thickness of the multilayer polymeric film. If there is more than one bulk layer, the bulk layers can have the same thickness, or the bulk layers may differ in thickness. The skin layer(s) and any bulk layer(s) may comprise any suitable portion of the total thickness of the multilayer polymeric multilayer film.

The skin layers have a combined thickness that is between 20% and 64% of the thickness of the multilayer polymeric film. The skin layer(s) and any bulk layer(s) may have a total thickness (that is, combined thickness) that is from 20% to 64%, alternatively from 20% to 63% or from 20% to 62% or from 20% to 61% or from 20% to 60%, or alternatively from 30% to 55% or from 25% to 55% of the thickness of the multilayer polymeric film. The sum of the thickness of the skin layer and any bulk and/or any energy dissipating layer(s) (EDL) may range from 20% to 64% of the thickness of the multilayer polymeric film.

The skin layers may comprise optional ingredients. The skin layers may comprise polymer processing aids. Polymer processing aids can help eliminating melt fracture and improving processability by increasing melt strength, improving bubble stability and reducing the need for blending. Each skin layer of the multilayer polymeric film may comprise from 0.1 wt. % to 5 wt. % or from 0.3 wt. % to 2 wt. % or from 0.5 wt. % to 1.5 wt. % of a polymer processing aid.

The skin layers may also comprise anti-blocking agents in order to prevent the layers of the multilayer polymeric films from sticking together. Each skin layer of the multilayer polymeric film may comprise from 0.1 wt. % to 5 wt. % or from 0.3 wt. % to 2 wt. % or from 0.3 wt. % to 1 wt. % of an anti-blocking agent.

The skin layers may also comprise slip additives. Slip additive may be added to reduce the surface coefficient of friction of the skin layers. Each skin layer of the multilayer polymeric film may comprise from 0.1 wt. % to 10 wt. % or from 0.3 wt. % to 5 wt. % or from 0.3 wt. % to 2 wt. % of a slip additive.

The skin layers (S) and bulk layer(s) (if present) can have any suitable average density. For example, if the skin layers (S) and bulk layer(s) comprise ethylene or ethylene alpha-olefin, suitable ranges of average density of the composition(s) comprising the skin layers (S) and bulk layer(s) may include between 0.90 g/cm³ and 0.93 g/cm³. The skin layers may comprise a composition having an average density of 0.92 g/cm .

When selecting polymers for the respective layers of the multilayer polymeric film, such layers can be compatible and self-adhering to each other. This prevents problems from occurring in joining the two or more layers (such as by coextrusion) into a substantially continuous, unitary multilayer polymeric film.

During manufacture of the multilayer polymeric films, one of the streams used to form the layers (such as an polypropylene-rich (A) layer) may be split into two separate streams. In such a case, the layers (for example, polypropylene-rich (A) layers) formed by the split stream (which may be designated A' and A") may have significantly less thickness than the other polypropylene-rich (A) layer(s) (and polyethylene-rich (B) layer(s)). An polypropylene-rich (A) layer may be split into two parts and form the outside of the core of the multilayer polymeric film so that the skin layer is attached to an A' and/or A" layer(s) (where the outer A' and A" layers are approximately one-half the thickness of other polypropylene-rich (A) layers). Such split layers may, but need not be equal in thickness. Also or alternatively, the polyethylene-rich (B) layer may be split into two parts and each part forms the outside of the core of the multilayer polymeric film.

Any of the materials in the various layers ((A), "B", (C), etc., skin layers, bulk layers) of the multilayer polymeric film 20 can comprise: pre-consumer recycled materials (materials recycled during manufacture); post-consumer recycled materials (materials recycled after use by consumers); materials that provide the multilayer polymeric film with a bio-based content (such as in addition to, or in place of petroleum-derived polyolefins); and combinations or blends of any of these types of materials.

Materials that provide the multilayer polymeric film with a bio-based content include materials that are at least partially derived from a renewable resource. Such materials include polymers that are derived from a renewable resource indirectly through one or more intermediate compounds.

The multilayer polymeric films may comprise additional materials for any purpose (e.g., additives) in any layer of the multilayer polymeric film. Additional materials may comprise other polymers (e.g., polypropylene, polyethylene, ethylene vinyl acetate, polymethylpentene, cyclic olefin copolymers, polyethylene ionomers, any combination thereof, or the like), opacifying materials, minerals, processing aids, extenders, waxes, plasticizers, adhesive layers, anti-blocking agents, anti-oxidants, fillers (e.g., glass, talc, calcium carbonate, or the like), nucleation agents, mold release agents, flame retardants, electrically conductive agents, anti-static agents, pigments, impact modifiers, stabilizers (e.g., a UV absorber), wetting agents, dyes, or any combination thereof. Minerals can include without limitation calcium carbonate, magnesium carbonate, silica, aluminum oxide, zinc oxide, calcium sulfate, barium sulfate, sodium silicate, aluminum silicate, mica, clay, talc, titanium dioxide, halloysite, and combinations thereof.

The multilayer polymeric film may comprise numerous different layer arrangements, a non-limiting number of which are shown in the drawings. The multilayer polymeric film comprises at least one polypropylene-rich (A) layer and at least one polyethylene-rich (B) layer, and typically further comprises a polymeric skin layer that forms each of the outer surfaces of the multilayer film. The polypropylene-rich (A) layer(s) and the polyethylene-rich (B) layer(s) can be provided in the form of a single B/A/B unit as shown in Fig. 1 or a single A/B unit as shown in Fig. 2, where A is the polypropylene-rich layer and B is the polyethylene-rich (e.g., HDPE) layer.

As exemplary shown in Fig. 3, additional layers or microlayers may be included in the multilayer polymeric film which are neither polypropylene-rich (A) layers nor polyethylene-rich (B) layers (e.g., one or more (C), "D", etc. layers).

The (C) layer may be positioned within the core of the multilayer polymeric film. The (C) layer may be a bulk layer having a thickness less than 10% of the thickness of the multilayer polymeric film.

As noted above, such additional layer or layers can be an energy dissipating layer (EDL), or other type of layer. Such additional layers or microlayers can be internal layers of the sequence, being interposed between the polypropylene-rich (A), and/or polyethylene-rich (B) layers (for example, A/C/B), and/or they may be positioned on one or both sides of the indicated sequences, that is, on the outer surfaces of the polypropylene-rich (A) and/or polyethylene-rich (B) layers. The C, D, etc. layers may provide other properties desired of the multilayer polymeric films described above including impact resistance.

An additional polypropylene-rich (A) layer or polyethylene-rich (B) layer may be added to the A/B unit to form still other units. Such embodiments may have the A/B/A layer arrangement as shown in Fig. 4, or the B/A/B layer arrangement shown in Fig. 1 (for example, to create five multilayer structures). Any of the above, or other, units may be stacked in order to form various repeating units. Some examples of other possible layer arrangements are described in greater detail below.

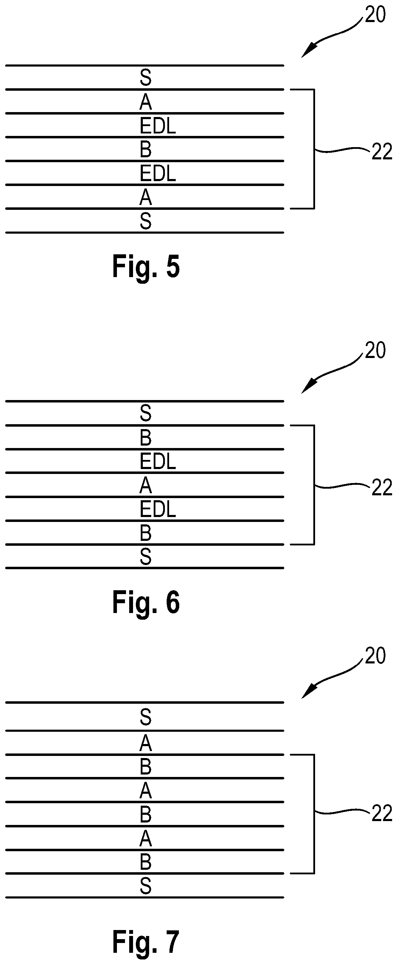

As exemplary shown in Figs. 5 and 6, the multilayer polymeric film 20 may comprise a seven layer structure. Fig. 5 shows a seven layer multilayer polymeric film comprising an S/A/EDL/B/EDL/A/S layer arrangement. Fig. 6 shows a seven layer multilayer polymeric film 20 comprising an S/B/EDL/A/EDL/B/S layer arrangement. The multilayer polymeric films containing such EDL's may have improved mechanical properties such as higher resistance to dart drop. The A/EDL/B/EDL/A stack (or the B/EDL/A/EDL/B stack) may be part of a multilayer repeating stack. Multilayer repeating stacks may be designated by reference letter M. One example of such a structure is shown in Fig. 10.

The various layer arrangements, thus, may include any of the following multilayer or microlayer stacks surrounded by skin layers: S/(A/B)ₙ/S (such as shown in Fig. 7); S/(A/B/A)ₙ/S (such as shown in Fig. 8); S/(B/A/B)ₙ/S (such as shown in Fig. 9); S/(A/C/B)ₙ/S; S/(A/C/B/C/A)ₙ/S; S/(A/B/A/C/A/B/A)ₙ/S; S/(A/C/D/B/D/C/A)ₙ/S; or S/(A/B)ₙ/C/(B/A)ₙ/S layers, where 'n' is the number of adjacent identical layer stacks. The multilayer polymeric film may comprise a single unit of the designated layers when "n" is equal to 1. Alternatively, the layers may be in a repeating, sequentially alternating arrangement where "n" is greater than or equal to 2.

The multilayer or microlayer stacks, M, can be disposed in numerous arrangements, including: throughout the entire multilayer polymeric film structure; through portions of the thickness of the multilayer polymeric film; or distributed in various groups within the multilayer polymeric film.

If the multilayer polymeric film comprises micro layers, the multilayer polymeric film may comprise more than one different microlayer sequence. For example, the multilayer polymeric film may comprise an additional microlayer sequence, comprised of repeating units where the number of repeating units can be equal to or different from n, and the structure of the microlayer sequence can be different from the structure of another microlayer sequence in any of the following features: number of microlayers; composition thereof; thickness; and relative thickness of the microlayers. When one or more additional microlayer sequences are present, they may be directly adhered one to the other. Alternatively, they may be separated by one or more layers serving different purposes, such as adhesive layers, used to increase the bond between the microlayer sequences, or bulk layers to increase the thickness of the overall structure.

The number of repeating units (stacks) in a repeating microlayer sequence is at least 2, alternatively at least 3, and alternatively at least 4. The number of repeating units can, however, be much higher than 3 or 4 (or even 5 or 6). The number of repeating units can, for example, comprise a multiple of 3, 4, 5, or 6. Typically, the number of repeating units is dictated by the particular technology used for the manufacture of these structures. The maximum number of layers in each repeating unit will depend on the extrusion equipment employed. Repeating units (stacks) comprising from 2 up to 9 or 10 layers, or more are possible. Non-limiting examples include repeating units (stacks) that are comprised of 5, 6, or 7 layers.

These structures are generally obtained using multiplier technology, where the multilayer melt flow corresponding to the first unit which is coextruded may be split, for example, perpendicular to the coextrusion layer interface, into a number of packets, (e.g., two, three or four), each having the same number and sequence of layers corresponding to that of the first unit. The packets are then stacked one on top of the other, and recombined, to provide for a multiplied number of units in an alternating sequence. For example, a two layer coextruded unit that is split into three packets, stacked, and recombined results in a coextrusion with 6 parallel layers, such as three sets of A/B layers. In turn, these can still be split and recombined one or more times. The number of packets in which each melt flow can be split is not limited to two, three or four, such values that are given above only by way of example, and can easily be higher. In particular, the multiplier technology currently available allows splitting a melt flow into two or four packets that are then stacked, one on top of the other, and processed as described above where each further splitting step can foresee an equal or a different number of packets. In principle, the number of multiplying steps can be as high as the equipment may allow and the resins may withstand. Typically, the number of multiplying steps is maintained between 1 and 6, alternatively between 2 and 5, alternatively between 2 and 4, and the number of layers in any microlayer sequences may comprise up to 1,000 microlayers, with a typical maximum of 800, 700, 600, 500, 400, 300, 200, or fewer micro layers.

Thus, while Figs. 1-10 generally illustrate various layer arrangements for multilayer polymeric films in a simplified manner, it will be appreciated that the multilayer polymeric films described herein can comprise from 4 layers to 1,000 layers; alternatively from 5 layers to 200 layers; alternatively from 5 to 64 layers.

As in any coextrusion process, the polymers or polymer blends used in the micro layer sequence may be selected and combined in the respective layers in such a way to yield polymer streams with similar rheological properties during co-extrusion. That is, the polymer streams may be sufficiently similar in viscosity at the temperatures chosen for the co-extrusion process to avoid significant interfacial instability. It may be desirable for the ratio of polymer layer viscosities used in the microlayer sequence to have a range from 1:3 to 3:1. The viscosity can be measured at shear rates between 10 sec⁻¹ and 100 sec⁻¹. The viscosity can be modeled using the Cross equation in the shear rate range of interest.

The multilayer polymeric films described herein may be substantially or completely non-heat shrinkable. Thus, the multilayer polymeric films will typically not be reheated and stretched post-extrusion to orient or align the crystallites or molecules of the materials forming the multilayer polymeric film. "Substantially non-heat shrinkable" films will have a total free shrink of less than 10% at 93°C under ASTM D2732-03. The multilayer polymeric films will have a total free shrink of less than 5%, or less than 1% under such conditions. In other instances, the multilayer polymeric films may be rendered heat-shrinkable, and have a total free shrink greater than or equal to the amounts specified.

The multilayer polymeric films described herein can be utilized in a variety of alternative applications, including: personal care absorbent products such as diapers, training pants, incontinence garments, sanitary napkins, and other hygiene articles, bandages, wipes and the like. For example, the multilayer polymeric film may be useful as a liquid impervious backsheet and/or barrier cuff on a disposable absorbent article. The multilayer polymer films can be joined with other films to form a laminate arrangement. Thus, the multilayer polymeric film can serve as a hygiene film that can be joined with a nonwoven material to form a laminate structure that can be used in hygiene related applications.

The multilayer polymeric films described herein can also be utilized in other disposable products such as trash bags and food bags; as well as straws and covered containers for food handling, preparation, serving, storage, and/or transportation; and packaging materials. Suitable packaging materials may include: bags for consumer products (such as disposable absorbent articles and fabric care products), and pouches, and/or releasable wrappers for individual wrapping hygiene articles, such as sanitary napkins.

The multilayer polymeric films of the present invention can provide satisfying printing quality. The multilayer polymeric films have been found relatively glossier than the non multilayer polymeric films (see Table 3).

### II. Methods of making the multilayer polymeric films

The aforementioned multilayer polymeric films may be prepared by any suitable method. The Multilayer polymeric films can be preferably made by blown film (bubble) processes, as described, for example, in The Encyclopedia of Chemical Technology, Kirk-Othmer, Third Edition, John Wiley & Sons, New York, 1981, Vol. 16, pp. 416-417 and Vol. 18, pp. 191-192. Processes for manufacturing biaxially oriented film such as the "double bubble" process described in U.S. Pat. No. 3,456,044 (Pahlke), and other suitable processes for preparing biaxially stretched or oriented film are described in U.S. Patents 4,865,902 (Golike et al.); 4,352,849 (Mueller); 4,820,557 (Warren); 4,927,708 (Herran et al.); 4,963,419 (Lustig et al.); and 4,952,451 (Mueller). Other multilayer polymeric film manufacturing techniques for food packaging applications are described in Packaging Foods With Plastics, by Wilmer A. Jenkins and James P. Harrington (1991), pp. 19-27, and in "Coextrusion Basics" by Thomas I. Butler, Film Extrusion Manual: Process, Materials, Properties pp. 1-80 (published by TAPPI Press (1992)).

A plurality of layers may be made in blown films by various methods. In U.S. Patent Publication No. US 2010/0072655 A1, two or more incoming streams are split and introduced in annular fashion into a channel with alternating microlayers that are surrounded by standard layer polymeric streams to form blown films containing micro layer regions. For annular dies, a known microlayer process for creating a plurality of alternating layers involves distributing the flow of the first polymer stream into every odd internal microlayer layer and distributing the flow of the second polymer stream into every even microlayer. This microlayer group is then introduced between channels of polymer streams of standard thickness. Microlayer and nanolayer technology for making blown films is marketed by BBS Corporation of Simpsonville, SC.

Tenter orientation processes may also be used in the biaxial orientation of the multilayer polymeric films described herein. The multilayer polymeric film may be stretched from 50% to 300% in the machine direction, and from 100% to 500% in the cross-machine direction.

The multilayer polymeric films can be laminated onto another layer(s) in a secondary operation, such as that described in Packaging Foods With Plastics, by Wilmer A. Jenkins and James P. Harrington (1991) or that described in "Coextrusion For Barrier Packaging" by W. J. Schrenk and C. R. Finch, Society of Plastics Engineers RETEC Proceedings, Jun. 15-17 (1981), pp. 211-229. If the multilayer polymeric film is a coextrusion of two or more layers (also described by Osbom and Jenkins), the multilayer polymeric film may still be laminated to additional layers of packaging materials, depending on the other physical requirements of the final multilayer polymeric film. "Laminations vs. Coextrusion" by D. Dumbleton (Converting Magazine (September 1992), also discusses lamination versus coextrusion. The multilayer polymeric films described herein can also go through other post extrusion techniques, such as a biaxial orientation process or uniaxial orientation.

The multilayer polymeric films described herein may be subjected to a post-quench biaxial orientation process. It is well known in the art that orientation may be achieved by reheating an extruded, quenched and unoriented polymeric film in an oven or heated zone that raises the temperature of the polymeric material above its glass transition temperature. The material is then stretched in at least one direction to orient, or align, the polymer chains within the film. The film is then annealed and subsequently cooled thereby allowing crystals to reform so that the stretch and orientation is maintained. The multilayer films may be stretched by 100% to 700% to create machine direction orientation if the cooled web is warmed prior to stretching. The stretch temperature selected is a compromise between maximizing the tensile strength of the multilayer polymeric film, line efficiency, and line speed.

A double-bubble orientation process may be used. A blown film may be oriented using a double or triple bubble process. For instance, a double bubble process starts with a melt stream of a polymeric material, exiting the blown die. The extruded film is hot blown by conventional techniques to form a blown bubble. An air cooling ring positioned circumferentially around the blown bubble cools the thermoplastic melt as it exits the die. The initial bubble is melt oriented in both the machine and transverse directions. Various blow up ratios may be used, such as a blow up ratio of between 1.5 and 3.0. The initial bubble is collapsed into a tube at pinch rolls. The collapsed bubble is then reheated and re-inflated to form the bubble and further orient the film in a blown bubble process. Re-inflation is done in a conventional manner by trapping air or other hot gas within the film tube so that the material stretches at its orientation temperature. The re-inflated and enlarged bubble is collapsed at a second set of pinch rolls. More re-inflation steps may be used such as in a triple bubble to relax the film and reduce the shrinkage to near zero.

Alternatively, multilayer polymeric films can be made by known coextrusion processes, and are typically made using a flat cast or planar sheet or annular blown film process. For cast films, methods to make multilayer polymeric films can include employing a conventional high output, high speed cast coextrusion line using multiple extruders, as well as those that use more elaborate techniques such as a "tenter framing" process. The processing conditions will depend upon the materials being used, the processing equipment and the desired multilayer polymeric film properties. Examples of early multilayer processes and structures are shown in U.S. Patents 3,565,985; 3,557,265; and 3,884,606.

Coextruded cast film or sheet structures typically have 2 to 5 layers; however, cast film or sheet structures including hundreds of layers are known. In one method for making a multilayer polymeric film, the number of layers may be multiplied by the use of a device as described in U.S. Patent 3,759,647. Other methods are further described in U.S. Patents 5,094,788 and 6,413,595. Such methods involve forming a first stream comprising discrete, overlapping layers of the two or more materials which are divided substantially perpendicular to the coextrusion layer interface into a plurality of branch streams. These branch streams are redirected and repositioned into stacks of the branch streams, and are recombined in overlapping relationship with layer interface essentially perpendicular to the stacking direction to form a second stream having a greater number of discrete, overlapping layers of the one or more materials which are distributed in the prescribed gradient or other distribution. Thin layers can be formed on spiral channel plates and these layers can flow into a central annular channel where micro-layer after micro-layer can then be stacked inside traditional thick layers. Such examples are described in U.S. Patent Publication No. US 2010/0072655 A1 (assigned to Cryovac, Inc.). PCT Publication WO 2008/008875 discloses a method of forming alternative types of multilayered structures having many, for example fifty to several hundred, alternating layers of foam and film. Layer multiplication technology for cast films is marketed by companies such as Extrusion Dies Industries, Inc. of Chippewa Falls, WI and Cloeren Inc. of Orange, TX.

### III. Properties of the Multilayer polymeric films

When, as described herein, there are differences between the composition of the adjacent layers, the multilayer polymeric film may have improved properties relative to films having the same material composition blended into a single layer and/or in typical one to three layer films. Such properties may include, for example one or more of the following: greater molecular orientation; higher tensile strength, higher tensile yield strength; higher impact resistance; and better resistance to tear but also gloss improvement. The multilayer polymeric films may be substantially transparent, or they can be opacified e.g. by using titanium dioxide (e.g. TiO₂ MB).

Without bounding with theory, it has been found that by increasing the amount of ICP in the polypropylene-rich (A) layer, some mechanical properties have been improved. Some mechanical properties range similar, e.g. maximum tensile strength in a machine direction or slightly better, e.g. maximum tensile strength in a cross-machine direction.

The multilayer polymeric film may have a maximum tensile strength in a cross-machine direction which is at least 9.5 N/cm or from 9.5 N/cm to 50 N/cm or from to 10 N/cm to 25 N/cm according to the ASTM D 882 Test Method.

The multilayer polymeric film may have a tensile stress in a cross-machine direction at 10% elongation which is at least 5.3 N/cm or from 5.3 N/cm to 30 N/cm or from 6 N/cm to 15 N/cm according to the ASTM D 882 Test Method. Hence, by increasing the amount of ICP in the polypropylene-rich (A) layer of the multilayer polymeric film, the film resiliency can be improved. In other words, the multilayer polymeric films can withstand more compression than the non multilayer polymeric films.

The dynamic coefficients of friction (Dyn CoF) of the multilayer polymeric films herein described are at the same level as the dynamic coefficients of friction of the non multilayer polymeric films (Comparative examples 1 and 2, see Table 3). Having a dynamic coefficient of friction less than 0.2 provides an indication that the multilayer polymeric films described herein are runnable. The multilayer polymeric films can be runnable on the bag manufacturing lines at a speed up to 120 bag/min.

The multilayer polymeric films described herein can have any suitable thickness including a thickness from 7 micrometers to 250 micrometers; alternatively from 10 micrometers to 13 micrometers or to less than 100 micrometers; alternatively from 13 micrometers to less than 50 micrometers. The multilayer polymeric films described herein may be down-gauged for use in similar applications by amounts greater than or equal to 5%, 10%, 15%, 20%, 25%, 30%, or 35% or more relative to conventional three layer polyolefin films where only LLDPE, HDPE or only a polypropylene core layer structure is used, while delivering comparable, or improved mechanical properties. The multilayer polymeric films described herein may, thus, be made relatively thin (for example, in cases in which the multilayer polymeric film is less than 50 micrometers thick). Such thin multilayer polymeric films can provide increased flexibility that is desirable for the applications described herein.

The polymers described above can be made into a cast film having an average or bulk density from 0.90 g/cm³ to 0.95 g/cm³, alternatively from 0.92 g/cm³ to 0.94 g/cm³. The melt flow rate for resins used in such cast films can be from 0.8 g/10 min to 20 g/10 min, alternatively from 1 g/10 min to 10 g/10 min. The melt flow rate for the resins can be measured in accordance with ASTM D1238-10, respectively using the standard conditions for polyethylene, which are 190°C / 2.16 kg, or the standard conditions for polypropylene, which are 230°C / 2.16 kg. The polymers can also be formed as blown films and can have a melt flow rate ranging from 0.4 g/10 min to 8 g/10 min, alternatively from 0.5 g/10 min to 4 g/10 min.

### EXAMPLES

Several multilayer polymeric films are created having 5 total layers with two outer skin layers and the interior layers forming the core of the multilayer polymeric films. The material ingredients used to produce the exemplary multilayer polymeric films are contained in Table 1. The formula and structure for the multilayer polymeric film examples are outlined in Table 2. The blown film processing parameters are common to those skilled in the art and can be found in the book entitled "Blown Film Extrusion: An Introduction" by Kirk Cantor, published by Carl Hanser Verlag; Munich, Germany, 2006. The multilayer polymeric films (Exs. 1. 2 and 3) have been extruded at a throughput of 350 kg/hr, with a 400 mm due head, 70/50 mm screws and a Blow-up ratio of 3.3 for Exs. 1 and 2, or a Blow-up ratio of 2.4 for Ex. 3.

The compositions of the multilayer polymeric films may comprise Titanium dioxide masterbatch in order to make the film white. When the polypropylene-rich (A) and polyethylene-rich (B) layers do not comprise any Titanium dioxide masterbatch, the multilayer polymeric film is transparent.

The physical properties for Comparative Exs. 1 and 2, and Exs. 1, 2 and 3 are shown in Table 3.

Tables 2 and 3 show three examples of the multilayer polymeric films in 5 layer film structures (Examples 1, 2 and 3, respectively) which yield comparable or even improved mechanical properties to non multilayer commercially available films (Comparative Exs. 1 and 2 which are made of 3 layers of polyethylene) that have higher or same thickness. These examples deliver 23-28% down-gauging potential compared to the commercially available films.

These examples demonstrate the benefits of separating the HDPE and PP layers and utilizing a multilayer polymeric film structure to improve mechanical properties.

**Table 1. Materials used in Film Making**

| Resin | Blown Films |
|---|---|
| LLDPE | DOWLEX® 5056.01E DOWLEX® 2056G |
| LDPE | DOW 312E® |
| m-LLDPE | EXCEED® 2018KB |
| HDPE | EXXON® HTA 108 |
| ICP | BOREALIS® RB709CF |

For all Examples 1-3,
- the outer skin layer comprises 68.5 wt. % LLDPE and 20.0 wt. % LDPE, 1.0 wt. % Slip additive with 0.5 wt. % of anti-blocking agent and 1.0 wt. % polymer processing aid; and 9 wt. % Titanium dioxide masterbatch;
- The inner skin layer comprises 75.5 wt. % LLDPE and 19.0 wt. % LDPE, 4.0 wt. % Slip additive with 0.5 wt. % of anti-blocking agent and 1.0 wt. % polymer processing aid.

**Table 2. Formula, Structure, and Parameters for Blown Films**

| **Sample** | **Description** | **# Layers** | **Thick. (gsm)** | **ICP conc. in (A) Layer** | **HDPE conc. in each (B) Layer** | **(A) Layer** | **(B) layers** | **TiO₂ MB conc. in (A) Layer** | **TiO₂ MB conc. in each (B) Layer** | **Balance of the resin in the (A) layer** | **Balance of the resin in each (B) layer** | **Skin Layers** | **Blow-up Ratio** |
|---|---|---|---|---|---|---|---|---|---|---|---|---|---|
| Comparative Ex. 1 | 3 Layer Polyethylene Commercial Blown Film | 3 | 38 | n/a | n/a | n/a | n/a | n/a | n/a | n/a | n/a | n/a | n/a |
| Comparative Ex. 2 | 3 Layer Polyethylene Commercial Blown Film | 3 | 30 | n/a | n/a | n/a | n/a | n/a | n/a | n/a | n/a | n/a | n/a |
| Ex. 1 | 5 layers (S/B/A/B/S) | 5 | 30 | 77 wt. % | 63.5 wt. % | 25.0 wt. % | 35.0 wt. % | 22 wt. % | n/a | 1.0 wt. % Slip add. | 33.5 wt. % LLDPE 3-4 wt. % Slip add. | 40.0 wt. % | 3.3 |
| Ex. 2 | 5 layers (S/B/A/B/S) | 5 | 30 | 85 wt. % | 50 wt. % | 25.0 wt. % | 35.0 wt. % | n/a | 15 wt. % | 14 wt. % m-LLDPE 1.0 wt. % Slip add | 30 wt. % LLDPE 3-5 wt. % additives | 40.0 wt. % | 3.3 |
| Ex. 3 | 5 layers (S/B/A/B/S) | 5 | 30 | 49 wt. % | 63.5 wt. % | 30.0 wt. % | 30.0 wt. % | 22 wt. % | n/a | 28 wt. % m-LLDPE 1.0 wt. % Slip add | 33.5 wt. % LLDPE 3.0 wt. % Slip add | 40.0 wt. % | 2.4 |

**Table 3. Physical Properties of the Films Described in Table 2**

| **Sample** | **Description** | **# Layers** | **Thick. (gsm)** | **Max. Tensile Strength MD (N/cm)** | **Max. Tensile Strength CD (N/cm)** | **Tensile Stress CD at 10% elongation (N/cm)** | **Dyn CoF (inside-inside)** | **Opacity (%)** | **Gloss (%)** |
|---|---|---|---|---|---|---|---|---|---|
| Comparative Ex. 1 | 3 Layer Polyethylene Commercial Blown Film | 3 | 38 | 13.2 | 12.8 | 5 | 0.14 | 67.7 | 72.6 |
| Comparative Ex. 2 | 3 Layer Polyethylene Commercial Blown Film | 3 | 30 | 11.9 | 9.2 | 4.8 | 0.14 | n/a | 60.1 |
| Ex. 1 | 5 layers (S/B/A/B/S) | 5 | 30 | 11.9 | 10.9 | 5.5 | 0.16 | 67.7 | 77.7 |
| Ex. 2 | 5 layers (S/B/A/B/S) | 5 | 30 | 11.9 | 10.3 | 5.3 | 0.18 | 65.4 | 74.8 |
| Ex. 3 | 5 layers (S/B/A/B/S) | 5 | 30 | 11.9 | 9.7 | 5.4 | 0.14 | 70 | 73.5 |

As shown in Table 3, the multilayer polymeric films of Examples 1-3 have a maximum tensile strength in a cross-machine direction which is at least 9.5 N/cm according to the ASTM D 882 Test Method.

Also, the multilayer polymeric films of Examples 1-3 have a tensile stress in a cross-machine direction at 10% elongation which is at least 5.3 N/cm or from 5.3 N/cm according to the ASTM D 882 Test Method.

The dynamic coefficients of friction (Dyn CoF) of the multilayer polymeric films of Examples 1-3 herein described are at the same level as the dynamic coefficients of friction of the comparative examples having the same thickness.

The gloss of the multilayer polymeric films of Examples 1-3 is at least 73.5%.

### TEST METHODS

The overall thickness of the multilayer polymeric films are measured according to the standard method ISO 4593.

The individual layer thickness are measured by a suitable microscopy technique (e.g. SEM) viewing a cross-section of the film. Specimens can be prepared by freeze fracture or microtoming. The thickness is measured to within ±0.1 microns on five separate specimens obtained from random areas of the film and the average thickness value is reported to within ± 0.1 microns.

The tensile properties of the multilayer polymeric films, i.e. maximum tensile strength in MD, maximum tensile strength in CD, the tensile stress in CD at 10% elongation are measured using the ASTM D 882 standard test method (Tensile properties of thin plastic sheeting), with a 25.4 mm sample width, 127 mm gauge length, and 127 mm/min rate of extension.

The dynamic coefficient of friction (also called kinetic coefficient of friction) of the multilayer polymeric films is measured according to the compendial method ASTM D 1894, with a 130 mm x 305 mm sample, with a crosshead speed of 127 mm/min, a test length of 130 mm, a pre test length of 10 mm, a sampling frequency of 50 Hz data pts/sec.
The opacity of the multilayer polymeric films is measured according to the standard method ISO 6504-3.
The gloss property of the multilayer polymeric films is measured according the standard method ASTM D-523

All proportions described herein are by weight, unless otherwise specified.

## Claims

1. A multilayer polymeric film having two outer surfaces and a thickness, said film comprising:
- a core comprising:
a) at least one polypropylene-rich (A) layer having a thickness, wherein polypropylene is the major component of the polypropylene-rich (A) layer, wherein the thickness of the polypropylene-rich (A) layer(s) comprises from 5% to 30% of the thickness of the multilayer polymeric film; wherein each polypropylene-rich (A) layer has a thickness from 0.05 micrometers to 50 micrometers and;
b) at least one polyethylene-rich (B) layer having a thickness, comprising high density polyethylene (HDPE) as the major component, preferably wherein said polyethylene-rich (B) layer is joined at least indirectly to said polypropylene-rich (A) layer, wherein the thickness of the polyethylene-rich (B) layer(s) comprises from 31% to 50% of the thickness of the multilayer polymeric film, wherein each polyethylene-rich (B) layer has a thickness from 0.05 micrometers to 75 micrometers; and
- a pair of skin layers, each skin layer forming each of the outer surfaces of said multilayer polymeric film, wherein the skin layers have a combined thickness that is between 20% and 64% of the thickness of the multilayer polymeric film, and preferably said combination of layers forming the core of the multilayer polymeric film is at least indirectly joined to said skin layers.

2. The multilayer polymeric film according to Claim 1, wherein at least some of said polypropylene in said polypropylene-rich (A) layer comprises at least one of the following types of polypropylene: homopolymer polypropylene, copolymer propylene (coPP) and/or impact copolymer polypropylene (ICP).

3. The multilayer polymeric film according to any preceding claims, wherein the polypropylene-rich (A) layer comprises a blend of polypropylene and at least one of LDPE, LLDPE, m-LLDPE, polyolefin plastomer (POP), polyolefin elastomer (POE), and olefin block copolymer (OBC).

4. The multilayer polymeric film according to claim 2, wherein at least some of said polypropylene in said polypropylene-rich (A) layer comprises impact copolymer polypropylene (ICP), wherein the impact copolymer polypropylene (ICP) comprise from 45 wt. % to 100 wt. % of the polypropylene-rich (A) layer(s).

5. The multilayer polymeric film of according to any preceding claims, wherein the HDPE in the polyethylene-rich (B) layer has a density of at least 0.94 g/cm³.

6. The multilayer polymeric film according to any preceding claims, wherein the polyethylene-rich (B) layer comprises one of the following:
a. a blend of said HDPE and at least one ethylene alpha-olefin;
b. a blend of said HDPE and at least one of: polyolefin plastomer (POP), polyolefin elastomer (POE), and olefin block copolymer (OBC); or
c. a blend of said HDPE and at least one of: LDPE, LLDPE, ethylene vinyl acetate, and ethylene methyl acrylate.

7. The multilayer polymeric film according to any preceding claims, wherein at least one of said skin layers comprises a blend of LDPE and LLDPE.

8. The multilayer polymeric film of according to any preceding claims, further comprising at least one of the following additional layers:
an additional polypropylene-rich (A) layer so that there is more than one polypropylene-rich (A) layer;
an additional polyethylene-rich (B) layer, so that there is more than one polyethylene-rich (B) layer,
wherein the at least one additional layer is positioned within the core of the multilayer polymeric film.

9. The multilayer polymeric film of according to any preceding claims, further comprising a (C) layer that has a different composition from the polypropylene-rich (A) and polyethylene-rich (B) layers, wherein said (C) layer is positioned within the core of the multilayer polymeric film, and said (C) layer is a bulk layer having a thickness less than 10% of the thickness of the multilayer polymeric film.

10. The multilayer polymeric film according to any preceding claims wherein said combination of layers forming the core of the multilayer polymeric film comprises polypropylene-rich (A) and polyethylene-rich (B) layers in an alternating and adjacent configuration.

11. The multilayer polymeric film according to any preceding claims wherein said combination of layers forming the core of the multilayer polymeric film comprises an additional polypropylene-rich (B) layer wherein at least a portion of said combination is in a B/A/B configuration.

12. The multilayer polymeric film according to any preceding claims having an overall thickness between 7 micrometers and 250 micrometers.

13. The multilayer polymeric film according to any preceding claims, wherein the multilayer polymeric film has a tensile stress in a cross machine direction at 10% elongation of at least 5.3 N/cm according to the ASTM D 882 Test Method.

14. The multilayer polymeric film according to any preceding claims, wherein the multilayer polymeric film has a maximum tensile strength in a cross machine direction of at least 9.5 N/cm according to the ASTM D 882 Test Method.

## Patentansprüche

1. Mehrschichtige Polymerfolie mit zwei Außenoberflächen und einer Dicke, wobei die Folie umfasst:
- einen Kern, umfassend:
a) wenigstens eine polypropylenreiche (A)-Schicht mit einer Dicke, wobei Polypropylen der Hauptbestandteil der polypropylenreichen (A)-Schicht ist, wobei die Dicke der polypropylenreichen (A)-Schicht(en) von 5 % bis 30 % der Dicke der mehrschichtigen Polymerfolie ausmacht; wobei jede polypropylenreiche (A)-Schicht eine Dicke von 0,05 Mikrometern bis 50 Mikrometern aufweist; und
b) wenigstens eine polyethylenreiche (B)-Schicht mit einer Dicke, umfassend Niederdruckpolyethylen (HDPE) als Hauptbestandteil, wobei die polyethylenreiche (B)-Schicht vorzugsweise wenigstens mittelbar mit der polypropylenreichen (A)-Schicht verbunden ist, wobei die Dicke der polyethylenreichen (B)-Schicht(en) von 31 % bis 50 % der Dicke der mehrschichtigen Polymerfolie ausmacht, wobei jede polyethylenreiche (B)-Schicht eine Dicke von 0,05 Mikrometern bis 75 Mikrometern aufweist; und
- ein Paar Hautschichten, wobei die einzelnen Hautschichten die einzelnen Außenoberflächen der mehrschichtigen Polymerfolie bilden, wobei die Hautschichten eine kombinierte Dicke aufweisen, die zwischen 20 % und 64 % der Dicke der mehrschichtigen Polymerfolie beträgt, und wobei vorzugsweise die Kombination aus Schichten, die den Kern der mehrschichtigen Polymerfolie bildet, wenigstens indirekt mit den Hautschichten verbunden ist.

2. Mehrschichtige Polymerfolie nach Anspruch 1, wobei wenigstens ein Teil des Polypropylens in der polypropylenreichen (A)-Schicht wenigstens einen der folgenden Typen von Polypropylen umfasst: Homopolymer-Polypropylen, Copolymer-Propylen (coPP) und/oder Impact-Copolymer-Polypropylen (ICP).

3. Mehrschichtige Polymerfolie nach einem der vorstehenden Ansprüche, wobei die polypropylenreiche (A)-Schicht eine Mischung aus Polypropylen und wenigstens einem von LDPE, LLDPE, m-LLDPE, Polyolefinplastomer (POP), Polyolefinelastomer (POE) und Olefinblockcopolymer (OBC) umfasst.

4. Mehrschichtige Polymerfolie nach Anspruch 2, wobei wenigstens ein Teil des Polypropylens in der polypropylenreichen (A)-Schicht Impact-Copolymer-Polypropylen (ICP) umfasst, wobei das Impact-Copolymer-Polypropylen (ICP) von 45 Gew.-% bis 100 Gew.-% der polypropylenreichen (A)-Schicht(en) ausmacht.

5. Mehrschichtige Polymerfolie nach einem der vorstehenden Ansprüche, wobei das HDPE in der polyethylenreichen (B)-Schicht eine Dichte von wenigstens 0,94 g/cm³ aufweist.

6. Mehrschichtige Polymerfolie nach einem der vorstehenden Ansprüche, wobei die polyethylenreiche (B)-Schicht eines der Folgenden umfasst:
a. eine Mischung aus dem HDPE und wenigstens einem Ethylen-alpha-Olefin;
b. eine Mischung aus dem HDPE und wenigstens einem von: Polyolefinplastomer (POP), Polyolefinelastomer (POE) und Olefinblockcopolymer (OBC); oder
c. eine Mischung aus dem HDPE und wenigstens einem von: LDPE, LLDPE, Ethylenvinylacetat und Ethylenmethylacrylat.

7. Mehrschichtige Polymerfolie nach einem der vorstehenden Ansprüche, wobei wenigstens eine der Hautschichten eine Mischung aus LDPE und LLDPE umfasst.

8. Mehrschichtige Polymerfolie nach einem der vorstehenden Ansprüche, ferner umfassend wenigstens eine der folgenden zusätzlichen Schichten:
eine zusätzliche polypropylenreiche (A)-Schicht, so dass mehr als eine polypropylenreiche (A)-Schicht vorliegt;
eine zusätzliche polyethylenreiche (B)-Schicht, so dass mehr als eine polyethylenreiche (B)-Schicht vorliegt,
wobei die wenigstens eine zusätzliche Schicht innerhalb des Kerns der mehrschichtigen Polymerfolie positioniert ist.

9. Mehrschichtige Polymerfolie nach einem der vorstehenden Ansprüche, ferner umfassend eine (C)-Schicht, die eine andere Zusammensetzung als die polypropylenreiche (A)- und polyethylenreiche (B)-Schicht aufweist, wobei die (C)-Schicht im Kern der mehrschichtigen Polymerfolie angeordnet ist, und wobei die (C)-Schicht eine massive Schicht mit einer Dicke von weniger als 10 % der Dicke der mehrschichtigen Polymerfolie ist.

10. Mehrschichtige Polymerfolie nach einem der vorstehenden Ansprüche, wobei die Kombination aus Schichten, die den Kern der mehrschichtigen Polymerfolie bilden, polypropylenreiche (A)- und polyethylenreiche (B)-Schichten in einer abwechselnden und benachbarten Konfiguration umfasst.

11. Mehrschichtige Polymerfolie nach einem der vorstehenden Ansprüche, wobei die Kombination aus Schichten, die den Kern der mehrschichtigen Polymerfolie bilden, eine zusätzliche polypropylenreiche (B)-Schicht umfasst, wobei wenigstens ein Teil der Kombination in einer B/A/B-Konfiguration vorliegt.

12. Mehrschichtige Polymerfolie nach einem der vorstehenden Ansprüche mit einer Gesamtdicke zwischen 7 Mikrometern und 250 Mikrometern.

13. Mehrschichtige Polymerfolie nach einem der vorstehenden Ansprüche, wobei die mehrschichtige Polymerfolie eine Zugspannung in Maschinenquerrichtung bei 10 % Dehnung von wenigstens 5,3 N/cm gemäß dem Testverfahren ASTM D 882 aufweist.

14. Mehrschichtige Polymerfolie nach einem der vorstehenden Ansprüche, wobei der mehrschichtige Polymerfolie eine maximale Zugfestigkeit in Maschinenquerrichtung von wenigstens 9,5 N/cm gemäß dem Testverfahren ASTM D 882 aufweist.

## Revendications

1. Film polymère multicouche présentant deux surfaces externes et une épaisseur, ledit film comprenant :
- une âme comprenant :
a) au moins une couche riche en polypropylène (A) présentant une épaisseur, le polypropylène étant le constituant principal de la couche riche en polypropylène (A), l'épaisseur de la ou des couches riches en polypropylène (A) représentant 5 % à 30 % de l'épaisseur du film polymère multicouche ; chaque couche riche en polypropylène (A) présentant une épaisseur de 0,05 micromètre à 50 micromètres ; et
b) au moins une couche riche en polyéthylène (B) présentant une épaisseur, comprenant du polyéthylène haute densité (HDPE) en tant que constituant principal, ladite couche riche en polyéthylène (B) étant de préférence liée au moins indirectement à ladite couche riche en polypropylène (A), l'épaisseur de la ou des couches riches en polyéthylène (B) représentant 31 % à 50 % de l'épaisseur du film polymère multicouche, chaque couche riche en polyéthylène (B) présentant une épaisseur de 0,05 micromètre à 75 micromètres ; et
- une paire de couches superficielles, chaque couche superficielle formant chacune des surfaces externes dudit film polymère multicouche, les couches superficielles présentant une épaisseur combinée qui est située entre 20 % et 64 % de l'épaisseur du film polymère multicouche et ladite combinaison de couches formant l'âme du film polymère multicouche étant de préférence liée au moins indirectement auxdites couches superficielles.

2. Film polymère multicouche selon la revendication 1, au moins une partie dudit polypropylène dans ladite couche riche en polypropylène (A) comprenant au moins un des types suivants de polypropylène : polypropylène homopolymère, propylène copolymère (coPP) et/ou polypropylène copolymère résistant aux chocs (ICP).

3. Film polymère multicouche selon l'une quelconque des revendications précédentes, la couche riche en polypropylène (A) comprenant un mélange de polypropylène et l'un au moins des éléments suivants : LDPE, LLDPE, m-LLDPE, plastomère polyoléfinique (POP), élastomère polyoléfinique (POE) et copolymère oléfinique séquencé (OBC).

4. Film polymère multicouche selon la revendication 2, au moins une partie dudit polypropylène dans ladite couche riche en polypropylène (A) comprenant du polypropylène copolymère résistant aux chocs (ICP), le polypropylène copolymère résistant aux chocs (ICP) comprenant 45 % en poids à 100 % en poids de la ou des couches riches en polypropylène (A).

5. Film polymère multicouche selon l'une quelconque des revendications précédentes, le HDPE dans la couche riche en polyéthylène (B) présentant une densité d'au moins 0,94 g/cm³.

6. Film polymère multicouche selon l'une quelconque des revendications précédentes, la couche riche en polyéthylène (B) comprenant l'un des éléments suivants :
a. un mélange dudit HDPE et d'au moins un éthylène-alpha-oléfine ;
b. un mélange dudit HDPE et d'au moins l'un des éléments suivants : un plastomère polyoléfinique (POP), un élastomère polyoléfinique (POE) et un copolymère oléfinique séquencé (OBC) ; soit
c. un mélange dudit HDPE et d'au moins l'un des éléments suivants : LDPE, LLDPE, éthylène-acétate de vinyle et éthylène-acrylate de méthyle.

7. Film polymère multicouche selon l'une quelconque des revendications précédentes, au moins l'une desdites couches superficielles comprenant un mélange de LDPE et de LLDPE.

8. Film polymère multicouche selon l'une quelconque des revendications précédentes, comprenant en outre au moins l'une des couches supplémentaires suivantes :
une couche supplémentaire riche en polypropylène (A) de sorte qu'il existe plus d'une couche riche en polypropylène (A) ;
une couche supplémentaire riche en polyéthylène (B), de sorte qu'il existe plus d'une couche riche en polyéthylène (B),
ladite au moins une couche supplémentaire étant positionnée à l'intérieur de l'âme du film polymère multicouche.

9. Film polymère multicouche selon l'une quelconque des revendications précédentes, comprenant en outre une couche (C) qui présente une composition différente de celle des couches riches en polypropylène (A) et riches en polyéthylène (B), ladite couche (C) étant positionnée à l'intérieur de l'âme du film polymère multicouche et ladite couche (C) étant une couche volumique présentant une épaisseur inférieure à 10 % de l'épaisseur du film polymère multicouche.

10. Film polymère multicouche selon l'une quelconque des revendications précédentes, ladite combinaison de couches formant l'âme du film polymère multicouche comprenant des couches riches en polypropylène (A) et riches en polyéthylène (B) dans une configuration alternée et adjacente.

11. Film polymère multicouche selon l'une quelconque des revendications précédentes, ladite combinaison de couches formant l'âme du film polymère multicouche comprenant une couche supplémentaire riche en polypropylène (B), au moins une partie de ladite combinaison étant dans une configuration B/A/B.

12. Film polymère multicouche selon l'une quelconque des revendications précédentes présentant une épaisseur globale entre 7 micromètres et 250 micromètres.

13. Film polymère multicouche selon l'une quelconque des revendications précédentes, le film polymère multicouche présentant une résistance à la traction dans le sens travers à un allongement de 10 % d'au moins 5,3 N/cm selon la méthode de test de la norme ASTM D 882.

14. Film polymère multicouche selon l'une quelconque des revendications précédentes, le film polymère multicouche présentant une résistance à la traction maximale dans le sens travers d'au moins 9,5 N/cm selon la méthode de test de la norme ASTM D 882.
